# EUROPEAN PATENT APPLICATION

(11) **EP 3 264 558 A1**
(43) Date of publication of application: **03.01.2018**
(21) Application number: 16755656.2
(22) Date of filing: 25.02.2016
(51) Int. Cl.: H02J 3/38

(54) **POWER CONVERSION SYSTEM, DISTRIBUTION BOARD, AND OPERATION SWITCHING METHOD**

(30) Priority: 25.02.2015 JP 2015035090
(71) Applicant: Kyocera Corporation, Kyoto-shi, Kyoto-fu 612-8501 (JP)
(72) Inventor: KAKUDA, Yuji, Kyoto-shi Kyoto 612-8501 (JP)
(74) Representative: Schwabe - Sandmair - Marx
(86) International application number: PCT/JP2016/055704
(87) International publication number: WO 2016/136912

(57) **Abstract**

A PCS comprises a communication unit that communicates with an external server; and a controller that changes from a grid connected state to a self-sustained state when a communication state between the PCS and the external server is equal to or lower than a predetermined threshold.

## Description

### TECHNICAL FIELD

The present invention relates to a power converting apparatus by which a DC power is converted to an AC power, a distribution board, and an operation switching method.

### BACKGROUND ART

A power converting apparatus (power conditioner) connected to a distributed power source that outputs a DC (Direct Current) power is known. The power converting apparatus includes a direct current convertor (DC/DC convertor) that converts a voltage of a DC power input from the distributed power source; and an inverter that converts the DC power input from the direct current convertor to an AC (Alternating Current) power (for example, Patent Document 1).

### PRIOR ART DOCUMENT

### PATENT DOCUMENT

Patent Document 1: Japanese Application Publication No. 2014-171359

### SUMMARY

A aspect is abstracted as a power converting apparatus comprising a communication unit that receives a power instruction message through a communication with an outside; and a controller that changes an operation state from a grid connected state to a self-sustained state when a determination is made that a communication state with the outside is equal to or lower than a predetermined threshold, the grid connected state being a state connected to a power grid and the self-sustained state being a state disconnected from the power grid.

A aspect is abstracted as a distribution board comprising a switching unit that connects or disconnects connection between a distributed power source and a power grid, wherein the switching unit switches an operating state from a grid connected state to a self-sustained state when a determination is made that a communication state between a server that transmits a power instruction message and a power converting apparatus that controls the distributed power source is equal to or lower than a predetermined threshold, the grid connected state being a state connected to the power grid and the self-sustained state being a state disconnected from the power grid.

A aspect is abstracted as an operation switching method comprising the steps of receiving, by a power converting apparatus, a power instruction message through a communication with an outside; and changing an operating state from a grid connected state to a self-sustained state when a determination is made that a communication state between the server and the power converting apparatus is equal to or lower than a predetermined threshold, the grid connected state being a state connected to a power grid and the self-sustained state being a state disconnected from the power grid.

### BRIEF DESCRIPTION OF THE DRAWINGS

Fig. 1 is a diagram illustrating a power management system 1 according to an embodiment.
Fig. 2 is a diagram illustrating a PCS 130 according to the embodiment.
Fig. 3 is a flowchart illustrating a control method according to the embodiment.
Fig. 4 is a flowchart illustrating a control method according to the embodiment.
Fig. 5 is a diagram illustrating the power management system 1 according to another embodiment.
Fig. 6 is a flowchart illustrating a control method according to another embodiment.
Fig. 7 is a flowchart illustrating a control method according to another embodiment.
Fig. 8 is a diagram illustrating a PCS 130 according to another embodiment.

### DESCRIPTION OF THE EMBODIMENT

An embodiment is described below by referring to the drawings. In the following description of the drawings, same or similar reference numerals are given to denote same or similar portions.

Note that the drawings are merely schematically shown and proportions of sizes and the like are different from actual ones. Thus, specific sizes and the like should be judged by referring to the description below. In addition, there are of course included portions where relationships or ratios of sizes of the drawings are different with respect to one another.

### [Overview of Embodiment]

A power converting apparatus, which needs to receive from an external server a message instructing suppression of an output of a distributed power source (hereinafter, output suppression message), is assumed to stop the output of the distributed power source when communication between the external server and the power converting apparatus is disconnected. Specifically, the power converting apparatus stops the output of the distributed power source, when communication abnormality between the external server and the power converting apparatus continues over a constant period (five minutes, for example).

In the above-described conventional technology, when the communication between the external server and the power converting apparatus is disconnected, the output of the distributed power source must be stopped. However, it is assumed that the output of the distributed power source will not be effectively utilized, when the output of the distributed power source is stopped.

Furthermore, in the above-described conventional technology, also known is a power converting apparatus that converts not only a DC power input from the distributed power source but also a DC power input from a storage battery to an AC power. However, it is also assumed that in this type of power converting apparatus, when the operation of the inverter is stopped, the storage battery cannot be charged nor discharged.

A power converting apparatus according to an embodiment comprising a communication unit that receives a power instruction message through a communication with an outside; and a controller that changes an operation state from a grid connected state to a self-sustained state when a determination is made that a communication state with the outside is equal to or lower than a predetermined threshold, the grid connected state being a state connected to a power grid and the self-sustained state being a state disconnected from the power grid.

In the embodiment, the controller changes the operating state from the grid connected state to the self-sustained state when determination is made that the communication state with the server is equal to or lower than the predetermined threshold, the grid connected state being a state connected to the power grid and the self-sustained state being a state disconnected from the power grid. Therefore, it is possible to avoid stopping the output of the distributed power source, and to effectively utilize the output of the distributed power source.

Furthermore, the power converting apparatus according to the embodiment includes: a first direct current convertor that converts a voltage of a DC power input from the distributed power source; a second direct current convertor that converts a voltage of a DC power input from the storage battery; an inverter that converts the DC power input from the first direct current convertor and the DC power input from the second direct current convertor to an AC power; and a controller that changes an operation state of the power converting apparatus from a grid connected state to a self-sustained state, the grid connected state being a state connected to the power grid and the self-sustained state being a state disconnected from the power grid. The power output in the self-sustained state from the inverter may be continuously supplied to a load connected to the inverter in the grid connected state.

Such a configuration presupposes that the power output in the self-sustained state from the inverter is supplied to the load connected to the inverter in the grid connected state. Under such a precondition, the controller performs a change from the grid connected state to the self-sustained state. In the self-sustained state, the operation of the inverter may not be necessarily stopped. Therefore, even when in instance where the output of the distributed power source needs to be stopped, it is possible to continue charging and discharging of the storage battery. Furthermore, the output of the distributed power source can also be continued.

### [Embodiment]

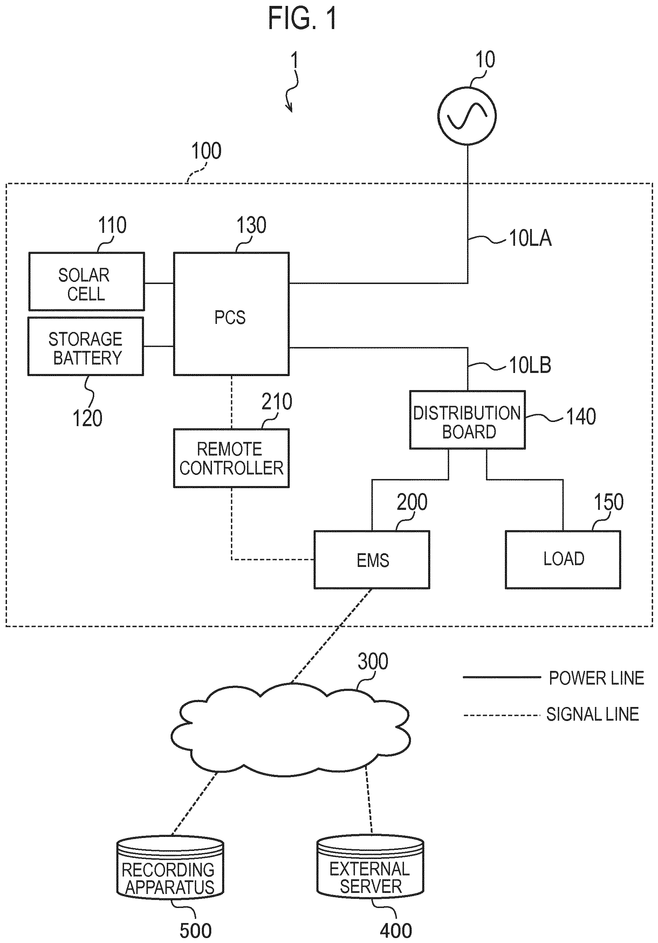

A power management system according to an embodiment will be described, below. Fig. 1 is a diagram illustrating the power management system 1 according to the embodiment.

As illustrated in Fig. 1, the power management system 1 includes a consumer's facility 100, an external server 400, and a recording apparatus 500. The consumer's facility 100 has an EMS 200, and the EMS 200 communicates with the external server 400 and the recording apparatus 500 via a network 300.

The consumer's facility 100 includes a solar cell 110, a storage battery 120, a PCS 130, a distribution board 140, and a load 150. Furthermore, the consumer's facility 100 includes the EMS 200 and a remote controller 210.

The solar cell 110 is an equipment that generates power in response to reception of solar light. The solar cell 110 outputs the generated DC power. An amount of power to be generated by the solar cell 110 varies depending on an amount of the solar radiation entering the solar cell 110. The solar cell 110 is an example of a distributed power source to operate in accordance with an output suppression message described later.

The storage battery 120 is an equipment in which power is accumulated. The storage battery 120 outputs the accumulated DC power. In the embodiment, the storage battery 120 may need not to operate in accordance with the output suppression message described later.

The PCS 130 is an example of a power converting apparatus (PCS: Power Conditioning System) that converts a DC power to an AC power. In the embodiment, the PCS 130 is connected to a main power line 10L (herein, a main power line 10LA and a main power line 10LB) connected to a power grid 10, and connected to both the solar cell 110 and the storage battery 120. The main power line 10LA is a power line connecting the power grid 10 and the PCS 130, and the main power line 10LB is a power line connecting the PCS 130 and the distribution board 140.

Here, the PCS 130 converts the DC power input from the solar cell 110 to an AC power, and converts the DC power input from the storage battery 120 to an AC power. Furthermore, the PCS 130 converts an AC power supplied from the power grid 10 to a DC power.

The distribution board 140 is connected to the main power line 10L (herein, the main power line 10LB). The distribution board 140 divides the main power line 10LB into a plurality of power lines, and distributes the power to an equipment (herein, the load 150 and the EMS 200) connected to the plurality of power lines. Note that the distribution board 140 may be configured to communicate the power information of the amount of electric power passing therethrough (the total electric energy, the electric energy for each branch, etc.) with the EMS 200.

The load 150 is an equipment in which the power supplied via the power line is consumed. Examples of the load 150 include an equipment such as a refrigerator, a lighting, an air conditioner, and a TV. The load 150 may be a single equipment, and may include a plurality of equipments.

The EMS 200 is an equipment (EMS: Energy Management System) that manages power information indicating the power supplied to the consumer's facility 100 from the power grid 10. The EMS 200 may manage an amount of power to be generated by the solar cell 110, an amount of power to be stored in the storage battery 120, and an amount of power to be discharged from the storage battery 120.

In the embodiment, the EMS 200 is connected to the remote controller 210 and the network 300. For example, the EMS 200 receives the power suppression message described later from the external server 400, and notifies the remote controller 210 of the power suppression message. Alternatively, the EMS 200 receives a schedule (calendar) described later from the external server 400, and based on the schedule (calendar), notifies the remote controller 210 of the power suppression message.

The PCS 130 has the remote controller 210 provided in connection with the PCS 130, and the remote controller 210 notifies the PCS 130 of various types of messages to operate the PCS 130. For example, the remote controller 210 notifies the PCS 130 of the power suppression message received from the EMS 200.

The network 300 is a communication network by which the EMS 200, the external server 400, and the recording apparatus 500 are connected. The network 300 may be the Internet. The network 300 may include a mobile communication network.

The external server 400 notifies the output suppression message that is a message to instruct suppression of the output of the distributed power source (herein, the solar cell 110). Here, the external server 400 may manage a schedule (calendar), as a whole of the power grid 10, including a date and time for suppressing the output of the distributed power source. The external server 400 notifies the output suppression message, based on such a schedule (calendar). Alternatively, the external server 400 may notify the EMS 200 of such a schedule (calendar). That is, the external server 400 is a server instructing the output suppression of the distributed power supply.

Here, the output suppression message and the schedule (calendar) include information indicating a suppression degree (an output suppression power threshold, for example) for the output of the distributed power source (herein, the solar cell 110). The suppression degree may be represented by an absolute value (xx kW, for example) of the output of the distributed power source (herein, the solar cell 110). Alternatively, the suppression degree may be represented by a relative value (decrease by xx kW, for example) of the output of the distributed power source (herein, the solar cell 110). Alternatively, the suppression degree may be represented by a suppression rate (xx%, for example) of the output of the distributed power source (herein, the solar cell 110). The suppression ratemay be a rate of the distributed power source relative to the output certified, as an output capability of the PCS that controls the distributed power source (hereinafter, facility certified output), when the distributed power source is installed in the consumer's facility 100. If the output capability of the distributed power source and that of the PCS differ, either one of a smaller output capability is selected, as the facility certified output. When a plurality of PCSs are installed, the facility certified output is a sum of the output capabilities of the plurality of PCSs.

The recording apparatus 500 is an apparatus that records various types of information. Specifically, the recording apparatus 500 records a verification record including whether or not the suppression of the output of the distributed power source is correctly executed according to the output suppression message. The verification record is an amount of power output from the distributed power source after reception of the output suppression message. The amount of power output from the distributed power source may be accumulated in an accumulation period (30 minutes, for example) .. In such a case, in the verification record accumulated for each accumulation period, the suppression of the output of the distributed power source may be correctly executed.

### (Power converting apparatus)

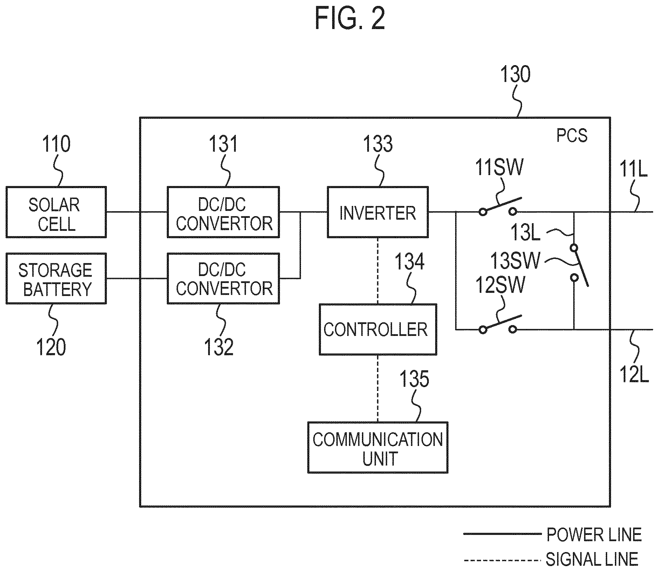

The power converting apparatus according to the embodiment will be described below. Fig. 2 is a diagram illustrating the PCS 130 according to the embodiment.

As illustrated in Fig. 2, the PCS 130 is connected to a power line 11L connected to the main power line 10LA, and a power line 12L connected to the main power line 10LB. Furthermore, a power line 13L connecting the power line 11L and the power line 12L is provided. The power line 13L is connected closer to the power line 11L at the main power line 10LA side than a switch 11SW, and connected closer to the power line 12L at the main power line 10LB than a switch 12SW.

The power line 11L is a power line connecting the power grid 10 and an inverter 133. The power line 11L may be a power line configuring a part of the main power line 10LA, and may be a power line divided from the main power line 10LA. The power line 12L is a power line connecting the inverter 133 and the distribution board 140 (load 150). The power line 12L may be a power line configuring a part of the main power line 10LB, and may be a power line divided from the main power line 10LB.

The PCS 130 includes the switch 11SW (first relay switch) provided on the power line 11L, the switch 12SW (second relay switch) provided on the power line 12L, and a switch 13SW (third relay switch) provided on the power line 13L.

The switch 11SW is controlled to be in a closed state in a grid connected state in which the PCS 130 is connected to the power grid 10. On the other hand, the switch 11SW is controlled to be in an opened state in a self-sustained state in which the PCS 130 parallels off the power grid 10.

The switch 12SW is controlled to be in an opened state in a grid connected state in which the PCS 130 is connected to the power grid 10. On the other hand, the switch 11SW is controlled to be in a closed state in a self-sustained state in which the PCS 130 is disconnected from the power grid 10.

The switch 13SW is controlled to be in a closed state in a grid connected state in which the distribution board 140 (load 150) is connected to the power grid 10. Likewise, the switch 13SW is controlled to be in a closed state in a grid connected state in which the PCS 130 is connected to the power grid 10. On the other hand, the switch 13SW is controlled to be in an opened state in a self-sustained state in which the distribution board 140 (load 150) is disconnected from the power grid 10. Likewise, the switch 13SW is controlled to be in an opened state in a self-sustained state in which the PCS 130 is disconnected from the power grid 10.

Generally, in the grid connected state in which the consumer's facility 100 is connected to the power grid 10, both the PCS 130 and the distribution board 140 (load 150) are connected to the power grid 10. Therefore, in such a grid connected state, the switch 11SW and the switch 13SW are controlled to be in a closed state, and the switch 12SW is controlled to be in an opened state. On the other hand, generally, in the self-sustained state in which the consumer's facility 100 is disconnected from the power grid 10, both the PCS 130 and the distribution board 140 (load 150) are not connected to the power grid 10. Therefore, in such a self-sustained state, the switch 11SW and the switch 13SW are controlled to be in an opened state, and the switch 12SW is controlled to be in a closed state.

As illustrated in Fig. 2, the PCS 130 includes a DC/DC convertor 131, a DC/DC convertor 132, the inverter 133, a controller 134, and a communication unit 135.

The DC/DC convertor 131 is a first direct current convertor that converts a voltage of a DC power input from the solar cell 110. The DC/DC convertor 131 may upconvert the voltage of the DC power and downconvert the voltage of the DC power.

The DC/DC convertor 132 is a second direct current convertor that converts a voltage of a DC power input from the storage battery 120. Furthermore, the DC/DC convertor 132 converts a voltage of the DC power input from the inverter 133. The DC/DC convertor 132 may upconvert the voltage of the DC power and may downconvert the voltage of the DC power.

An operation of outputting the DC power from the storage battery 120 to the DC/DC convertor 132 is discharge from the storage battery 120. The operation of outputting the DC power from the DC/DC convertor 132 to the storage battery 120 is charge into the storage battery 120.

The inverter 133 converts the DC power input from the DC/DC convertor 131 and the DC power input from the DC/DC convertor 132, to an AC power. Furthermore, the inverter 133 converts the AC power supplied from the power grid 10 to a DC power.

The controller 134 controls the PCS 130. Firstly, the controller 134 controls an amount of power generated by the solar cell 110. In particular, the controller 134 controls the amount of power generated by the solar cell 110 by MPPT (Maximum Power Point Tracking) methord. As a result, an operation point (point determined by an operation-point voltage value and power value, or a point determined by an operation-point voltage value and electric current value) of the solar cell 110 is optimized. Secondly, the controller 134 controls the charge amount and the discharge amount in the storage battery 120.

Here, the controller 134 suppresses the output of the solar cell 110 according to the output suppression message or the schedule (calendar). As described above, the suppression degree may be represented by an absolute value (xx kW, for example) of the output of the solar cell 110. Alternatively, the suppression degree may be represented by a relative value (decrease by xx kW, for example) of the output of the solar cell 110. Alternatively, the suppression degree may be represented with a suppression rate (xx%, for example) of the output of the solar cell 110.

In the embodiment, the controller 134 changes, when the communication between the external server 400 and the PCS 130 is disconnected, the operation state of the PCS 130 from the grid connected state to the self-sustained state. The power output in the self-sustained state from the inverter 133 may be continuously supplied to the load 150 connected to the inverter 133 in the grid connected state. In addition, even during a change period from the grid connected state to the self-sustained state, the power output from the inverter 133 may be continuously supplied to the load 150.

Specifically, "even during the change period from the grid connected state to the self-sustained state, the power output from the inverter 133 is continuously supplied to the load 150" means that, for example, the power is required to be continuously supplied to the load 150 at the time of change. That is, at the time of change, the power is required to be supplied without any interruption to the load 150 that is connected in the grid connected state. It is noted that it is required that the operation of the load 150 will not be interpreted due to the failure in supplying the power at the time of change; therefore, the power may be reduced due to, for example, the instantaneous reduction of the voltage. For example, when the load 150 is a fluorescent light, the illumination may be temporarily decreased due to the temporary reduction of the voltage at the time of change.

Specifically, when changing the operation state of the PCS 130 from the grid connected state to the self-sustained state, the controller 134 switches the switch 11SW from a closed state to an opened state and switches the switch 12SW from an opened state to a closed state while keeping the switch 13SW in a closed state, after which the controller 134 switches the switch 13SW from a closed state to an opened state.

As described above, the change from the grid connected state to the self-sustained state is performed while keeping the switch 13SW in a closed state. Thus, even during such a change period, the power output from the inverter 133 is supplied to the load 150 without any interruption.

Here, the controller 134 may perform the change from the grid connected state to the self-sustained state without stopping operations of the DC/DC convertor 131, the DC/DC convertor 132, and the inverter 133. Furthermore, the controller 134 may perform the change from the grid connected state to the self-sustained state when the power consumption of the load 150 can be covered with the power outputtable from the inverter 133. The power outputtable from the inverter 133 is the sum of the generated power of the solar cell 110 and the charge amount of the storage battery 120.

In the embodiment, the controller 134, may automatically change, when the communication between the external server 400 and the PCS 130 is recovered, the operation state of the PCS 130 from the self-sustained state to the grid connected state.

Specifically, when changing the operation state of the PCS 130 from the self-sustained state to the grid connected state, the controller 134 switches the switch 13SW from an opened state to a closed state, after which the controller 134 switches the switch 12SW from a closed state to an opened state and switches the switch 11SW from an opened state to a closed state.

As described above, the switch 13SW is first switched from an opened state to a closed state, and then the change from the self-sustained state to the grid connected state is performed. Thus, even during such a change period, the power output from the inverter 133 is supplied to the load 150 without any interruption.

Meanwhile, the controller 134 may not automatically change, when the communication between the external server 400 and the PCS 130 is recovered, the operation state of the PCS 130 from the self-sustained state to the grid connected state. In other words, the controller 134 will continue the self-sustained operation even after the communication is recovered. In such a case, the operation state of the PCS 130 is changed from the self-sustained state to the grid connected state by a manual operation of a user. The user may configure in advance whether or not to automatically perform the change from the self-sustained state to the grid connected state when the communication is recovered, or may determine which is better, depending on the situation of the self-sustained operation (for example, the storage capacity of the storage battery, the power generation amount of the solar cell, and the power consumption of the load).

A factor of disconnecting the communication between the external server 400 and the PCS 130 may be disconnection of the communication between the external server 400 and the EMS 200 and disconnection of the communication between the EMS 200 and the remote controller 210. Alternatively, a factor of disconnecting the communication between the external server 400 and the PCS 130 may be disconnection of the communication between the remote controller 210 and the communication unit 135.

For example, the controller 134 detects the disconnection of the communication, upon reception of the message indicating the disconnection of the communication from the EMS 200 when the disconnection of the communication between the external server 400 and the EMS 200 is detected by the EMS 200. Alternatively, the controller 134 may detect the disconnection of the communication upon reception of the message indicating the disconnection of the communication from the remote controller 210 when the disconnection of the communication between the EMS 200 and the remote controller 210 is detected by the remote controller 210. In such a case, the message indicating the disconnection of the communication may be replaced by a message instructing an operation stop of the solar cell 110 (hereinafter, operation stop instruction).

The disconnection of the communication may not include an instantaneous communication disconnection. Specifically, the controller 134 my detect the disconnection of the communication when a state where the communication is disconnected continues over a constant period (five minutes, for example). It is noted that the disconnection of the communication is an aspect where the communication state between the external server 400 and the PCS 130 is equal to or less than a predetermined threshold. The communication state is determined by a magnitude of a predetermined threshold such as RSSI (Received Signal Strength Indication), SNR (Signal to Noise Ratio), or SIR (Signal to Interference Ratio), for example. More specifically, in the communication between the external server 400 and the EMS 200, for example, when a value of the RSSI of the communication is equal to or less than a predetermined threshold, "determination of the communication state being equal to or less than a predetermined threshold" is made.

The controller 134 outputs a verification record for verifying whether or not the suppression of the output of the solar cell 110 is correctly executed according to the output suppression message or the schedule (calendar). As described above, the verification record is an amount of power output from the solar cell 110 after the output suppression message is received. The controller 134 outpus zero as the verification record when the change from the grid connected state to the self-sustained state is performed.

The communication unit 135 communicates with the remote controller 210. For example, the communication unit 135 receives the output suppression message notified from the external server 400. The communication unit 135 transmits to the recording apparatus 500 the verification record output from the controller 134.

Furthermore, the communication unit 135 receives, when it is detected by the EMS 200 or the remote controller 210 that the communication is disconnected, a message indicating the disconnection of communication from the EMS 200 or the remote controller 210. In such a case, the message indicating the disconnection of the communication may be replaced by a message instructing an operation stop of the solar cell 110 (operation stop instruction). In the embodiment, the communication unit 135 receives an operation stop instruction from the EMS 200 or the remote controller 210.

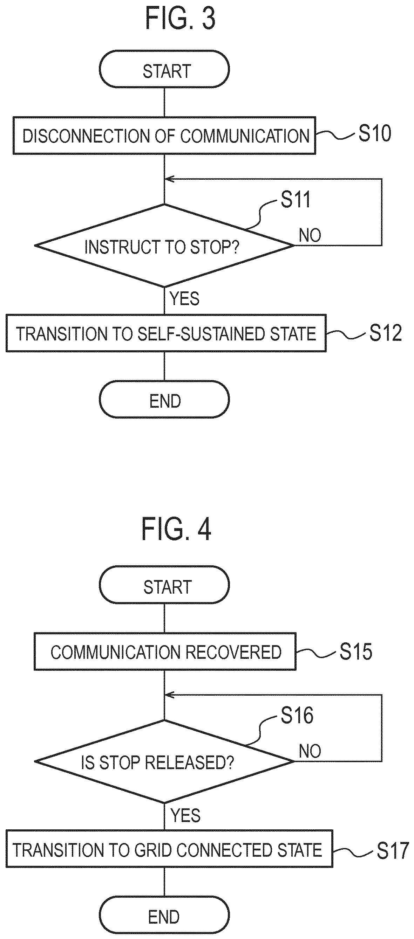

A control method according to the embodiment will be described below. Fig. 3 and Fig. 4 are flowcharts showing the control method according to the embodiment.

Firstly, a case of stopping the output of the solar cell 110 will be explained with reference to Fig. 3.

As illustrated in Fig. 3, in step S10, the communication between the external server 400 and the PCS 130 is disconnected. Here, the disconnection of the communication between the external server 400 and the PCS 130 is disconnection of the communication between the external server 400 and the EMS 200 and disconnection of the communication between the EMS 200 and the remote controller 210.

In step S11, the PCS 130 determines whether or not a message instructing the stop of the operation of the solar cell 110 (operation stop instruction) has been received from the remote controller 210. If a determination result is YES, the PCS 130 moves to a process of step S12. If the determination result is NO, the PCS 130 holds steady.

In step S12, the PCS 130 performs the change from the grid connected state to the self-sustained state. Specifically, the PCS 130 switches the switch 11SW from a closed state to an opened state and switches the switch 12SW from an opened state to a closed state while keeping the switch 13SW in a closed state, after which the PCS 130 switches the switch 13SW from a closed state to an opened state.

Secondly, a case of resuming the output of the solar cell 110 will be explained with reference to Fig. 4.

As illustrated in Fig. 4, in step S15, the communication between the external server 400 and the PCS 130 is recovered.

In step S16, the PCS 130 determines whether or not a message instructing a release of the operation stop of the solar cell 110 (operation stop release instruction) has been received from the remote controller 210. If a determination result is YES, the PCS 130 moves to a process of step S16. If the determination result is NO, the PCS 130 holds steady.

In step S17, the PCS 130 performs the change from the self-sustained state to the grid connected state. Specifically, the PCS 130 switches the switch 13SW from an opened state to a closed state, after which the PCS 130 switches the switch 12SW from a closed state to an opened state and switches the switch 11SW from an opened state to a closed state.

### (Operation and effect)

In the embodiment, it is presupposed that the power output in the self-sustained state from the inverter is supplied to the load 150 connected to the inverter 133 in the grid connected state. Under such a precondition, the PCS 130 performs, upon reception of a message instructing the operation stop of the solar cell 110 (operation stop instruction), the change from the grid connected state to the self-sustained state. In the self-sustained state, the operation of the inverter 133 may not be necessarily stopped even in a state in which the communication between the external server 400 and the PCS 130 is disconnected. Therefore, even when in instance where the output of the solar cell 110 must be stopped, it is possible to continue charging and discharging of the storage battery 120. Furthermore, power generation of the solar cell 110 can be continued.

### [Another Embodiment]

Another embodiment will be described, below. A difference from the above-described embodiment will be described, below.

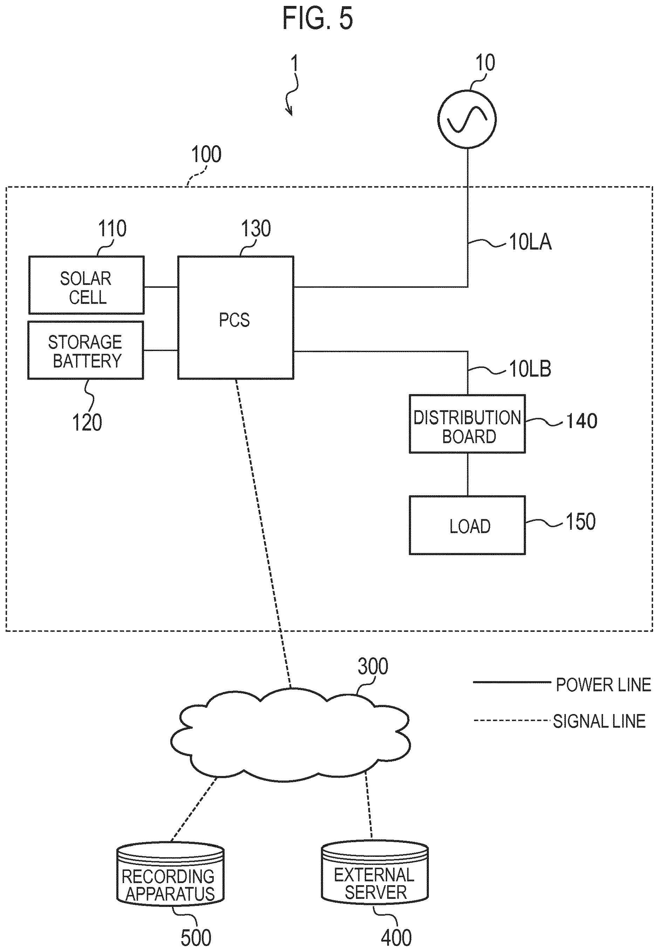

In the other embodiment, the consumer's facility 100 does not include the EMS 200 and the remote controller 210, as illustrated in Fig. 5. The PCS 130 (communication unit 135) is directly connected to the network 300, and communicates with the external server 400 and the recording apparatus 500.

Therefore, the PCS 130 (controller 134) detects the disconnection of the communication between the external server 400 and the EMS 200. For example, the PCS 130 (controller 134) may detect the disconnection of the communication depending upon whether or not a beacon signal cyclically transmitted from the external server 400 is successfully received. Alternatively, the PCS 130 (controller 134) may detect the disconnection of the communication by monitoring the network 300.

### (Control method)

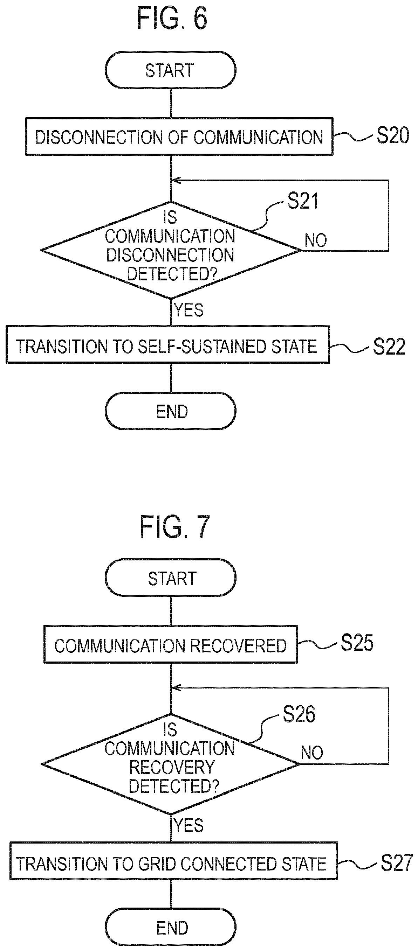

A control method according to another embodiment will be described below. Fig. 6 and Fig. 7 are flowcharts showing the control method according to the other embodiment.

Firstly, a case of stopping the output of the solar cell 110 will be explained with reference to Fig. 6.

As illustrated in Fig. 6, in step S20, the communication between the external server 400 and the PCS 130 is disconnected.

In step S21, the PCS 130 determines whether or not the communication disconnection has been detected. If a determination result is YES, the PCS 130 moves to a process of step S22. If the determination result is NO, the PCS 130 holds steady.

In step S22, the PCS 130 performs the change from the grid connected state to the self-sustained state. Specifically, the PCS 130 switches the switch 11SW from a closed state to an opened state and switches the switch 12SW from an opened state to a closed state while keeping the switch 13SW in a closed state, after which the PCS 130 switches the switch 13SW from a closed state to an opened state.

Secondly, a case of resuming the output of the solar cell 110 will be explained with reference to Fig. 7.

As illustrated in Fig. 7, in step S25, the communication between the external server 400 and the PCS 130 is recovered.

In step S26, the PCS 130 determines whether or not the communication recovery has been detected. If a determination result is YES, the PCS 130 moves to a process of step S27. If the determination result is NO, the PCS 130 holds steady.

In step S27, the PCS 130 performs the change from the self-sustained state to the grid connected state. Specifically, the PCS 130 switches the switch 13SW from an opened state to a closed state, after which the PCS 130 switches the switch 12SW from a closed state to an opened state and switches the switch 11SW from an opened state to a closed state.

### (Operation and effect)

In another embodiment, it is presupposed that the power output in the self-sustained state from the inverter is supplied to the load 150 connected to the inverter 133 in the grid connected state. Under such a precondition, the PCS 130 performs, upon detection of the disconnection of the communication between the external server 400 and the PCS 130, the change from the grid connected state to the self-sustained state. In the self-sustained state, the operation of the inverter 133 may not be necessarily stopped even in a state in which the communication between the external server 400 and the PCS 130 is disconnected. Therefore, even when in instance where the output of the solar cell 110 must be stopped, it is possible to continue charging and discharging of the storage battery 120. Furthermore, power generation of the solar cell 110 can be continued.

### [Another Embodiment]

Another embodiment will be described, below. A difference from the above-described embodiment will be described, below.

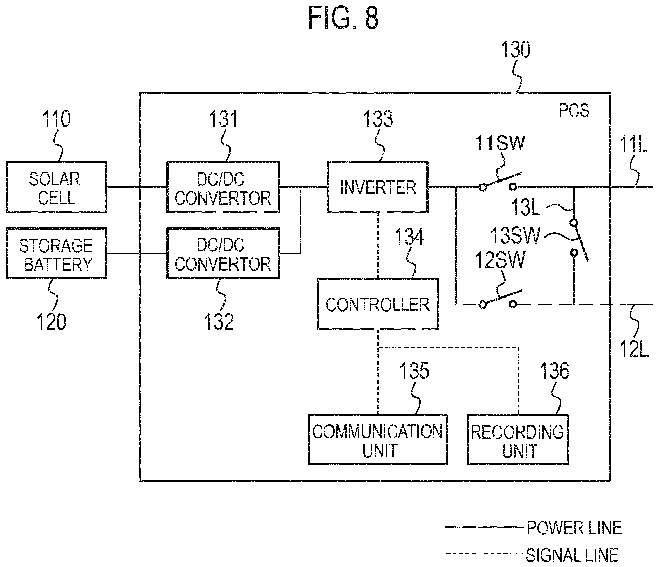

In the other embodiment, the PCS 130 includes a recording unit 136, as illustrated in Fig. 8. The recording unit 136 records, in much the same way as the recording apparatus 500 does, the verification record to verify whether or not the suppression of the output of the distributed power source is correctly executed according to the output suppression message. In such a case, the recording unit 136 may record the verification record output from the controller 134.

In the other embodiment, the recording unit 136 that records the verification record is provided in the PCS 130, and thus, the power management system 1 need not to include the recording apparatus 500.

### [Other Embodiments]

The present invention was described in terms of the embodiment set forth above, the invention should not be understood to be limited by the statements and the drawings constituting a part of this disclosure. From this disclosure, various alternative embodiments, examples, and operational technologies will be obvious to those skilled in the art.

The embodiments provide an example of the solar cell 110 as the distributed power source to operate in accordance with the output suppression message. However, the distributed power source is not limited thereto. The distributed power source may be an equipment that utilizes a natural energy such as a wind power and a geothermal heat to generate power. Alternatively, the distributed power source may be a fuel cell that utilizes a fuel gas to produce power.

In the embodiments, the controller 134 controls the PCS 130. In such a case, the controller 134 may control the PCS 130 according to an instruction from the EMS 200 or the remote controller 210. In other words, when the communication between the external server and the power converting apparatus is disconnected, a controller (a function block including a similar function to that of the controller 134) that changes the operation state of the power converting apparatus from the grid connected state of being connected to the power grid to the self-sustained state of being disconnected from the power grid may be provided in the EMS 200 or the remote controller 210.

In the other embodiment, the recording unit 136 that records the verification record is provided in the PCS 130. However, the embodiment is not limited thereto. The recording unit 136 that records the verification record may be provided in the EMS 200 or the remote controller 210.

In the embodiment, the 11SW, the 12SW, and the 13SW are provided in the PCS 130, however the embodiment is not limited thereto. A switching unit configured to switch the grid connected state and the self-sustained state may be provided in the distribution board 140.

The entire content of Japanese patent application No. 2015-035090 (filed on February 25, 2015) is incorporated herein by reference.

## Claims

1. A power converting apparatus comprising:
a communication unit that receives a power instruction message through a communication with an outside; and
a controller that changes an operation state from a grid connected state to a self-sustained state when a determination is made that a communication state with the outside is equal to or lower than a predetermined threshold, the grid connected state being a state connected to a power grid and the self-sustained state being a state disconnected from the power grid.

2. The power converting apparatus according to claim 1, comprising:
a first direct current convertor that converts a voltage of a DC power input from the distributed power source;
a second direct current convertor that converts a voltage of a DC power input from a storage battery; and
an inverter that converts the DC power input from the first direct current convertor and the DC power input from the second direct current convertor to an AC power; wherein
the power output in the self-sustained state from the inverter is continuously supplied to a load connected to the inverter in the grid connected state.

3. The power converting apparatus according to claim 1 or 2, wherein
even during a change period from the grid connected state to the self-sustained state, the power output from the inverter is continuously supplied to the load.

4. The power converting apparatus according to any one of claims 1 to 3, wherein
the controller performs the change from the grid connected state to the self-sustained state when a power consumption of the load is covered with an outputtable power from the inverter.

5. The power converting apparatus according to any one of claims 2 to 4, wherein
the controller changes, when communication between the external server and the power converting apparatus is recovered, an operation state of the power converting apparatus from the self-sustained state to the grid connected state.

6. The power converting apparatus according to any one of claims 2 to 4, wherein
the controller does not automatically change, when the communication between the external server and the power converting apparatus is recovered, the operation state of the power converting apparatus from the self-sustained state to the grid connected state.

7. The power converting apparatus according to any one of claims 1 to 6, comprising:
a first relay switch provided on a first power line connecting the inverter and a power grid;
a second relay switch provided on a second power line connecting the inverter and a load; and
a third relay switch provided on a third power line connecting the first power line and the second power line, wherein
the controller
when changing the operation state of the power converting apparatus from the grid connected state to the self-sustained state, switches the first relay switch from a closed state to an opened state and switches the second relay switch from an opened state to a closed state while keeping the third relay switch in a closed state, and then switches the third relay switch from a closed state to an opened state.

8. The power converting apparatus according to claim 5, wherein
when changing the operation state of the power converting apparatus from the self-sustained state to the grid connected state, the controller switches the third relay switch from an opened state to a closed state, and then switches the second relay switch from a closed state to an opened state and switches the first relay switch from an opened state to a closed state.

9. The power converting apparatus according to any one of claims 1 to 8, wherein
the controller performs the change from the grid connected state to the self-sustained state without stopping operations of the first direct current convertor, the second direct current convertor, and the inverter.

10. The power converting apparatus according to any one of claims 1 to 9, wherein
the controller outputs a verification record to verify whether or not suppression of an output of the distributed power source is correctly executed, and
the controller outputs zero as the verification record when the change from the grid connected state to the self-sustained state is performed.

11. A distribution board, comprising:
a switching unit that connects or disconnects connection between a distributed power source and a power grid, wherein
the switching unit switches an operating state from a grid connected state to a self-sustained state when a determination is made that a communication state between a server that transmits a power instruction message and a power converting apparatus that controls the distributed power source is equal to or lower than a predetermined threshold, the grid connected state being a state connected to the power grid and the self-sustained state being a state disconnected from the power grid.

12. An operation switching method, comprising the steps of
receiving, by a power converting apparatus, a power instruction message through a communication with an outside; and
changing an operating state from a grid connected state to a self-sustained state when a determination is made that a communication state between the server and the power converting apparatus is equal to or lower than a predetermined threshold, the grid connected state being a state connected to a power grid and the self-sustained state being a state disconnected from the power grid.
